# Europäisches Patentamt

## European Patent Office

## Office européen des brevets

(19)

(11) Publication number: **0 191 971**
**B1**

(12)

# EUROPEAN PATENT SPECIFICATION

(45) Date of publication of patent specification: **02.11.88**

(51) Int. Cl.⁴: **B 25 J 18/06**

(21) Application number: **85305587.9**

(22) Date of filing: **06.08.85**

(54) Robot arm.

(30) Priority: **19.02.85 GB 8504218**

(43) Date of publication of application:
**27.08.86 Bulletin 86/35**

(45) Publication of the grant of the patent:
**02.11.88 Bulletin 88/44**

(84) Designated Contracting States:
**AT BE CH DE FR IT LI LU NL SE**

(56) References cited:
**DE-A-3 210 466**
**FR-A-1 496 094**
**FR-A-2 533 487**

(73) Proprietor: **LITTON U.K. LIMITED**
**Friars Court Friarage Passage**
**Aylesbury Buckinghamshire, HP20 2SJ (GB)**

(72) Inventor: **Pigott, Norman Brian**
**95, Parsonage Lane**
**Bishop's Stortford Hertfordshire (GB)**

(74) Representative: **Matthews, Heather Clare et al**
**Keith W Nash & Co Pearl Assurance House 90-92**
**Regent Street**
**Cambridge CB2 1DP (GB)**

Courier Press, Leamington Spa, England.

## Description

Field of the Invention

This invention relates generally to robot arms and in particular to a robot arm for carrying a tool the use of which causes large mechanical forces to be transmitted back through the arm to its support.

Background to the Invention

In the manufacture of vehicle bodies as an example, but also in many other fields, it is often not possible to use a conventional caliper welding tool. It is instead commonly required to carry out single point welding using an anvil or opposed tool on the reverse side of the parts to be welded in order to provide back-up against the applied thrust.

Typical welding impact thrust forces are in the range of 500 to 2000 lbs (227 to 907 kg) at the point of impact and it is this large force which has to be transmitted back to the base support, via the robot arm itself and the bearing at which this arm is mounted for movement.

A large impact force of the order of that mentioned above, if taken by roller or ball races incorporated in the drive transmission to the arm, rapidly cause indentation or other damage to the race, and where the arm consistently operates over a small arc of travel, the region of wear is concentrated, which is even more disadvantageous.

In DE—A—3210466 there is disclosed an automated minipulator or robot arm having a ball and socket joint about which the arm is movable. In order to achieve its object of providing an increased number of degrees of movement, the disclosure proposes a plurality of such ball and socket jointed arms connected serially one to another. In one arrangement such arms are moved by pairs of extensible linkages or actuators which are connected across at an angle from a point on the arm spaced from the ball joint of the arm and a fixed point adjacent the mating socket.

The Invention

According to the invention, robot arm apparatus includes a robot arm arrangement including a robot arm adapted to carry a tool, a ball and socket joint by means of which the arm is movably mounted and in which the ball is in direct contact with the interior surface of the socket over a spherically curved surface area which remains substantially constant irrespective of angular movement of the arm, and a drive coupling connected to the arm for effecting angular movement of the latter, characterised in that the drive coupling comprises two drive linkages one for effecting angular movement of the robot arm in one plane and the other for effecting angular movement of said arm in a plane normal to said one plane, in that each linkage includes a link which at one end is pivotally connected to the robot arm substantially along an axis normal to the direction in which in use a thrust load derived from the tool is transmitted along the arm, and in that the other end of each link is connected to an eccentric device drivable in a circular path centred at a spacing from the centre of the ball and socket joint by the length of the link.

In accordance with the invention, therefore, the path of load transmission is separated from the drive path. This enables the drive coupling to be of small dimensions as compared to the size which would be needed if the load thrust was to be transmitted therethrough. More generally, therefore, the invention avoids the requirement to use increasingly large and expensive drive transmissions according to the thrust load to which the robot arm is to be subjected.

A preferred arrangement employs a ball formed at the end of the robot arm, seated in a socket carried by a suitable support, which could be the moving end of a primary robot arm but more typically will be a carriage mounted for linear movement.

The link pivot point on the robot arm is spaced from the ball and socket joint, but preferably by a distance which is only a small fraction of the length of the arm to the tool. The length of the path of angular movement of the tool is thus considerably greater than that of the driven eccentric.

An important feature of the invention concerns the use of a socket (at the ball and socket joint) which is formed in parts which can be relatively adjusted to enable the ball either to rotate freely therein or to be clamped in a chosen position of angular adjustment.

In operation, typically in the welding of a vehicle body, for example, the socket clamp will be released, the robot arm swung to the next welding point, and the socket clamp restored prior to the welding operation. In single point welding, either a shaped anvil or an opposed tool, preferably carried by a similar robot, will provide a back up for the applied thrust. The socket support will, in application to the welding of vehicle bodies, preferably be carried by a rectilinear carriage system which enables linear adjustment of the robot arm in three dimensions. Such a carriage system is readily designed in turn to absorb the applied thrust derived from the ball and socket joint. The robot arm may alternatively be carried by a primary robot arm, in turn designed to transmit the derived thrust, for example by means of a ball and socket joint in accordance with the invention.

Description of the Drawings

In the accompanying drawings:

Figure 1 is a diagrammatic view of a robot arm spot welding apparatus in accordance with the invention;

Figure 2 shows the apparatus in somewhat greater detail;

Figure 3 is an enlarged view of the robot arm and its mounting;

Figure 4 shows a robot arm mounted on a sliding carriage; and

Figure 5 is a perspective view of the overall layout of a welding station, in particular for vehicle bodies, incorporating the apparatus of the invention.

Description of Embodiment

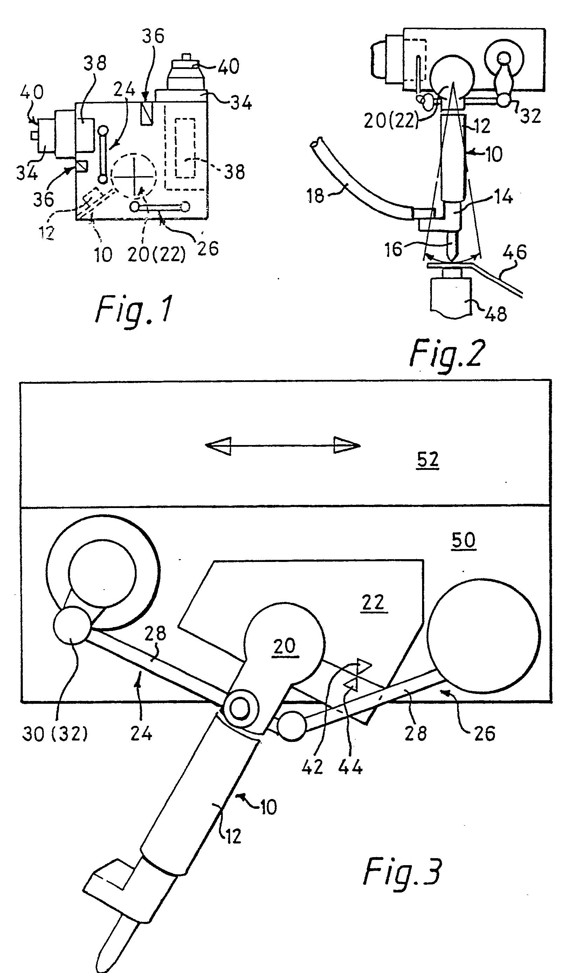

Referring to Figures 1 to 5, a spot welding apparatus incorporates a robot arm 10 for a welding tool, which as indicated and as is conventional, comprises a gun cylinder 12 and piston/ tool head 14 carrying the tool 16. Reference 18 denotes a power supply feeder.

The arm 10 is formed, at the end remote from the tool head, with a ball 20 held within a socket 22 to form a ball and socket joint. The ball 20 is in direct contact with the interior of the spherical socket, and has a constant area of engagement therewith independently of angular movement of said robot arm 10.

Angular movement of the robot arm is produced by drive couplings 24, 26 by which the arm can be swung in either of two mutually perpendicular planes. Each drive coupling 24 or 26 comprises a simple pivotal link 28 driven by an eccentric 30 to which the link is pivoted via a rose joint 32. The eccentric 30 is drivable along a circular arc to effect a corresponding rotational movement of the robot arm via the link.

The drive for the eccentric 30 is produced by a d.c servo 34 associated with resolver 36, with transmission via harmonic gear box 38 (Figure 1). The transmission also includes brake 40. It will be seen from Figure 3 that the link 28 is pivotal to the arm 10 at an intermediate position in the length of said arm, of the order of 1/5 to 1/4 of the length of the arm from the ball and socket joint.

As diagrammatically indicated in Figure 3, the part forming the socket of the ball and socket joint is formed in two relatively adjustable parts 42, 44. By means of the adjustable parts, the ball 20, and thus the robot arm 10, can be clamped tight in the socket and freed sufficiently for angular rotation by either one of the drive couplings. In use, therefore, the robot arm 10 is first unclamped, swung to a fresh operational position, and reclamped before the welding tool 16 is operated. It will be noted from Figure 2 that the spot welding tool 16 acts on the part 46 to be welded against back-up tooling 48, which in some circumstances may alternatively consist of an opposed welding tool.

In use, operation of the tool involves an impact welding force of some 500 to 2000 lbs (227 to 907 kg) at the welding spot. With the above-described construction in accordance with the invention, the impact or thrust load is transmitted through the arm 10 directly to the ball and socket joint 20, 22, and the drive couplings 24, 26 play substantially no part in load transfer. Thus, from the ball and socket joint 20, 22, the load is transferred directly to the support 50 on which the socket 22 is mounted, typically a carriage mounted for linear movement on a slide 52.

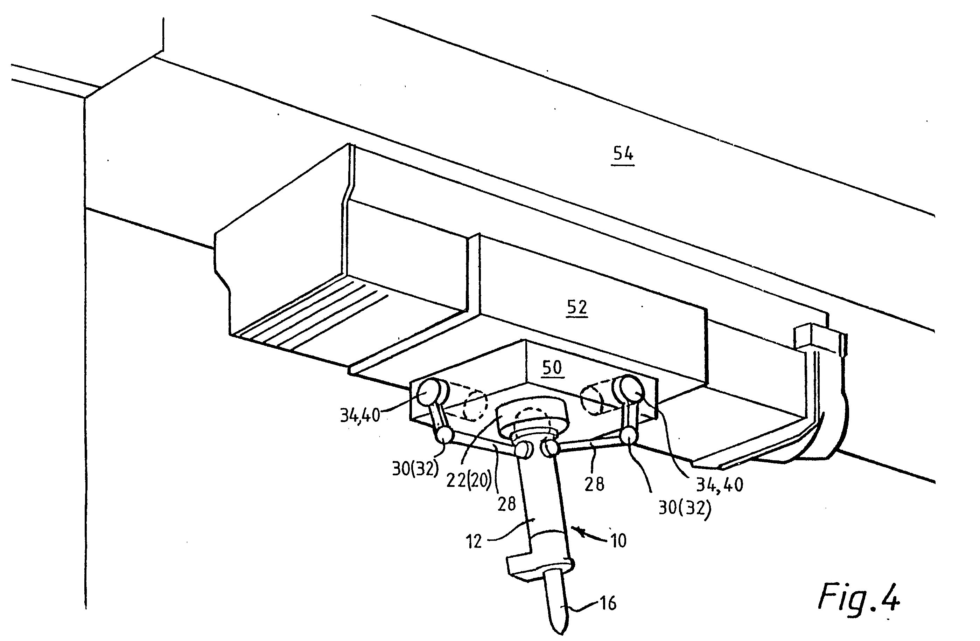

Such an arrangement is shown by way of example in Figure 4, where the slide 52 is carried on an overhead gantry 54. Other references in Figure 4 are the same as those employed in Figures 1 to 3.

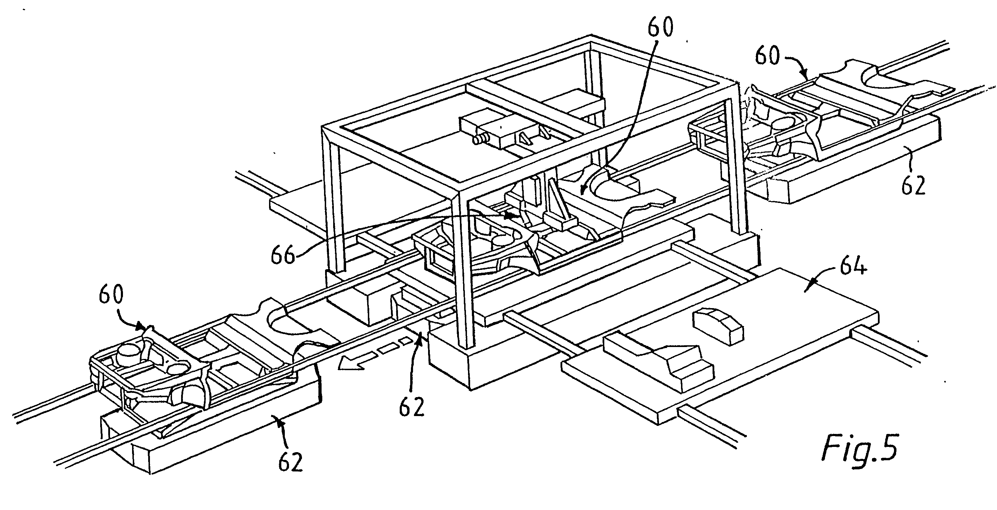

Figure 5 shows the layout of a welding station on an automatic guided vehicle production line. Reference 60 denotes the vehicle chassis, to which is being welded, for example, the transmission tunnel housing. The chassis units are conveyed longitudinally through the station, whereat they are temporarily unloaded from their conveying carriages 62 to enable positioning of back-up tooling on a tray 64 beneath the chassis, prior to a spot welding operation by welding apparatus 66 which is arranged in the manner previously described with reference to Figures 1 to 3, including a robot arm carried on a ball and socket joint itself carried by a linear carriageway system.

The apparatus of the invention is especially useful also, for example, for welding inside a closed vehicle chassis (ie chassis plus roof body). Due to its compact size enabled by the ball and socket joint, it can be mounted on the end of a column mounted arm projecting into the closed chassis through a window opening.

However, the invention can also be employed in fields other than welding of vehicle bodies, and even fields outside welding, in particular where a robot arm is required to carry a tool the use of which causes generation of high thrust loads which have to be transmitted through the robot arm to its support.

**Claims**

1. A robot arm arrangement including a robot arm (10) adapted to carry a tool, a ball and socket joint (21, 22) by means of which the arm is movably mounted and in which the ball is in direct contact with the interior surface of the socket over a spherically curved surface area which remains substantially constant irrespective of angular movement of the arm, and a drive (24, 26) coupling connected to the arm for effecting angular movement of the latter, characterised in that the drive coupling comprises two drive linkages (24, 26), one for effecting angular movement of the robot arm in one plane and the other for effecting angular movement of said arm in a plane normal to said one plane, in that each linkage includes a link (28) which at one end is pivotally connected to the robot arm (10) substantially along an axis normal to the direction in which in use a thrust load derived from the tool is transmitted along the arm, and in that the other end of each link is connected to an eccentric device (30) drivable in a circular path centred at a spacing from the centre of the ball and socket joint by the length of the link (28).

2. An arm arrangement as claimed in Claim 1, wherein a ball (20) is formed at the end of the robot arm, and is seated in a socket carried by a suitable support (22).

3. An arm arrangement as claimed in Claim 2, wherein the support is the moving end of a primary robot arm (10).

4. An arm arrangement as claimed in Claim 2, wherein the support is a carriage (50, 52) mounted for linear movement.

5. An arm arrangement as claimed in Claim 1, wherein a power drive formed by a dc servo (34) and a harmonic gear box (38) is provided to drive the eccentric.

6. An arm arrangement as claimed in any preceding claim, wherein the link pivot point on the robot arm is spaced from the ball and socket joint by a distance which is a small fraction of the length of the arm.

7. An arm arrangement as claimed in any preceding claim, wherein the socket is formed in parts which can be relatively adjusted to enable the ball either to rotate freely therein or to be clamped in a chosen position of angular adjustment.

## Patentansprüche

1. Roboterarmanordnung mit einem ein Werkzeug und ein Universalgelenk (21, 22) tragenden Roboterarm (10), der mit Hilfe des Universalgelenkes beweglich gelagert ist und bei dem die Kugel mit der Innenfläche des Lagers über einer kugelförmigen Oberfläche, die unabhängig von der Winkelbewegung des Armes im wesentlichen konstant bleibt, in Beziehung steht, und mit einer mit dem Arm zum Bewirken einer Winkelbewegung des letzteren verbundenen Antriebskupplung (24, 26), dadurch gekennzeichnet, daß die Antriebskupplung zwei Antriebsgestänge (24, 26) enthält, eins zum Bewirken einer Winkelbewegung des Roboterarmes in einer Ebene und das andere zum Bewirken einer Winkelbewegung des Armes in einer zu dieser Ebene senkrechten Ebene, daß jedes Gestänge ein Gelenk (28) enthält, das an einem Ende verdrehbar mit dem Roboterarm (10) im wesentlichen entlang einer Achse drehbar verbunden ist, die senkrecht zu der Richtung verläuft, in der bei Gebrauch eine vom Werkzeug abgeleitete Axialkraft entlang des Armes übertragen wird, und daß das andere Ende jedes Gelenkes mit einer Exzentervorrichtung (30) verbunden ist, die in einer Kreisbahn antreibbar ist, die in einem Abstand gleich der Länge des Gestänges (28) vom Mittelpunkt des Universalgelenkes zentriert ist.

2. Eine Armanordnung wie in Anspruch 1 beansprucht, wobei eine Kugel (20) am Ende des Roboterarmes ausgebildet und in einem von einer geeigneten Abstützung (22) getragenen Lager gelagert ist.

3. Eine Armanordnung wie in Anspruch 2 beansprucht, wobei die Abstützung das sich bewegende Ende eines primären Roboterarmes (10) ist.

4. Eine Armanordnung wie in Anspruch 2 beansprucht, wobei die Abstützung ein linear verschiebbar gelagerter Schlitten (50, 52) ist.

5. Eine Armanordnung wie in Anspruch 1 beansprucht, wobei ein von einem Gleichspannungsservomotor (34) und einem harmonischen Getriebe (38) gebildeter Kraftantrieb zum Antrieb des Exzenters vorgesehen ist.

6. Eine Armanordnung wie in irgendeinem vorhergehenden Anspruch beansprucht, wobei der Gestängegelenkpunkt auf dem Roboterarm um einen Abstand, der ein kleiner Bruchteil der Länge des Armes ist, vom Universalgelenk abliegt.

7. Eine Armanordnung wie in irgendeinem vorhergehenden Anspruch beansprucht, wobei das Lager in Teilen ausgebildet ist, die zum Ermöglichen entweder einer freien Drehung der Kugel im Lager oder zu deren Festklemmen in einer gewählten Winkeleinstellung relativ zueinander eingestellt werden können.

## Revendications

1. Dispositif à bras manipulateur comprenant un bras de robot (10) destiné à porter un outil; une articulation sphérique (21, 22) au moyen de laquelle ce bras est monté de manière mobile, et dans laquelle la rotule est en contact direct avec la surface intérieure d'une crapaudine par l'intermédiaire d'une zone superficielle à courbure sphérique qui demeure sensiblement constante quel que soit le mouvement angulaire du bras; et un accouplement d'entraînement (24, 26) relié au bras pour assurer le mouvement angulaire de ce dernier, caractérisé par le fait que l'accouplement d'entraînement comprend deux tringleries d'entraînement (24, 26), dont l'une provoque un mouvement angulaire du bras de robot dans un plan, et l'autre provoque ce mouvement angulaire dudit bras dans un plan perpendiculaire au plan précité; par le fait que chaque tringlerie comporte une biellette (28) qui est reliée au bras de robot (10) avec faculté de pivotement, par l'une de ses extrémités, sensiblement le long d'un axe perpendiculaire à la direction dans laquelle, en service, une charge de poussée provenant de l'outil est répercutée le long du bras; et par le fait que l'autre extrémité de chaque biellette est reliée à un dispositif à excentrique (30) pouvant être mené selon une trajectoire circulaire dont le centre est décalé, du centre de l'articulation sphérique, de la longueur de ladite biellette (28).

2. Dispositif à bras selon la revendication 1, dans lequel une rotule (20) est façonnée à l'extrémité du bras de robot et est logée dans une crapaudine (22) portée par un support approprié.

3. Dispositif à bras selon la revendication 2, dans lequel le support est l'extrémité mobile d'un bras de robot primaire (10).

4. Dispositif à bras selon la revendication 2, dans lequel le support est un chariot (50, 52) monté à mouvement linéaire.

5. Dispositif à bras selon la revendication 1, dans lequel un entraînement de puissance, formé par un servomoteur (34) à courant continu et par une boîte d'engrenages synchrones (38), est prévu pour entraîner l'excentrique.

6. Dispositif à bras selon une quelconque revendication précédente, dans lequel le point de pivotement de la biellette sur le bras de robot est espacé de l'articulation sphérique d'une distance qui représente une petite fraction de la longueur dudit bras.

7. Dispositif à bras selon une quelconque des revendications précédentes, dans lequel la crapaudine est constituée de parties pouvant être ajustées l'une par rapport à l'autre, pour permettre à la rotule soit d'y tourner librement, soit d'être bloquée dans une position de réglage angulaire sélectionnée.

Fig.1

Fig.2

Fig.3

Fig.4

0 191 971

*Fig.5*

0 191 971